# EUROPÄISCHE PATENTSCHRIFT

(11) **EP 0 657 096 B1**
(45) Veröffentlichungstag und Bekanntmachung des Hinweises auf die Patenterteilung: **27.08.1997**
(21) Anmeldenummer: 94101766.7
(22) Anmeldetag: 05.02.1994
(51) Int. Cl.: A01G 9/10

(54) **Kulturplatte zum Züchten von Jungpflanzen**
Cultivating tray for growing plantlets
Plateau de culture pour l'élevage de plantules

(30) Priorität: 11.12.1993 DE 9319024 U
(43) Veröffentlichungstag der Anmeldung: 14.06.1995
(73) Patentinhaber: Dümmen, Günter, D-47495 Rheinberg (DE)
(72) Erfinder: Dümmen, Günter, D-47495 Rheinberg (DE)
(74) Vertreter: Funken, Josef, Dipl.-Ing.

(56) Entgegenhaltungen:
- EP-A- 0 056 665
- EP-A- 0 213 420
- FR-A- 2 354 700
- NL-A- 7 613 359
- US-A- 4 329 813

## Beschreibung

Die Erfindung betrifft eine Kulturplatte zum Züchten von Jungpflanzen mit in parallel zueinander angeordneten Reiben an der Deckplatte der Kulturplatte angeformten und gegenüber der Deckplatte nach unten orientierten Töpfen mit Löchern am Boden der Töpfe und mit einem von der Deckplatte nach unten gerichteten umlaufenden Rand.

Eine herkömmliche Kulturplatte dieser Art weist in parallel zueinander angeordneten Reihen topfartige Vertiefungen bzw. Töpfe auf, die oben offen sind und an ihrem Boden eine Öffnung kleineren Durchmessers haben. Die kleinere Öffnung im Boden dient dazu, den durchwurzelten Preßballen zusammen mit der Jungpflanze von unten her aus der topfartigen Vertiefung herauszudrücken und überschüssiges Wasser ablaufen zu lassen. Diese Kulturplatte ist rechteckig ausgebildet und hat einen umlaufenden Rand (siehe FR-A-2 354 700).

Der Erfindung liegt die Aufgabe zugrunde, eine Kulturplatte zu schaffen, von der mehrere ohne vertikalen Abstand voneinander leer und mehrere mit vertikalem Abstand voneinander mit Jungpflanzen zu deren Transport und Versand bepflanzt stapelbar sind und stabile Stapel größerer Höhen ermöglichen.

Diese Aufgabe wird erfindungsgemäß dadurch gelöst, daß in der ersten Reihe anstelle der beiden äußersten Töpfe zwei Stützen sowie in der letzten Reihe anstelle der beiden zweitäußersten Töpfe zwei Stützen vorgesehen sind, die hohl und unten offen sowie nach oben orientiert sind, daß in der ersten Reihe die zwei zweitäußersten Töpfe am Boden je einen Stützring sowie in der letzten Reihe die zwei äußersten Töpfe am Boden je einen Stützring aufweisen und daß am oberen Ende der Stützen je ein Zentrierungsansatz vorgesehen ist.

Auf diese Weise gelangt man zu einer Kulturplatte zum Züchten von Jungpflanzen, die die vorstehend erwähnte Aufgabe voll erfüllt. Hinzu kommt, daß die einzelnen Kulturplatten selbst stabil sind und darüber hinaus auch die mit diesen Kulturplatten gebildeten Stapel ebenfalls sehr stabil sind, und zwar gestapelt mit vertikalem Abstand oder gestapelt ohne vertikalen Abstand voneinander.

In weiterer Ausgestaltung der Erfindung ist vorgesehen, daß die Stützen in ihren zur Kulturplatte hinweisenden Wänden je eine Öffnung aufweisen. Hierdurch wird ermöglicht, daß die Kulturplatte in den Öffnungen von Greifern einer Transportvorrichtung erfaßt, angehoben, bewegt und wieder abgesetzt wird.

Zweckmäßig können die Stützringe am Boden der zwei äußersten und der zwei zweitäußersten Töpfe seitliche Ausnehmungen aufweisen. Hierdurch ist sichergestellt, daß überschüssiges Wasser aus diesen Töpfen durch die seitlichen Ausnehmungen ablaufen kann, wenn diese Töpfe in einem Stapel von Kulturplatten auf den gegenüberliegenden Stützen der darunter befindlichen Kulturplatte aufstehen.

Des weiteren empfiehlt es sich, daß die Töpfe unterhalb der Deckplatte mit Stabilisierungsstegen verbunden sind.

Außerdem kann ein Teil der Stabilisierungsstege in einem bestimmten Muster jeweils um einen gleichen Betrag nach unten verlängert sein.

Des weiteren kann an den vier Seiten der Kulturplatte der umlaufende Rand je eine untere Aussparung aufweisen. Dadurch ist es möglich, die Kulturplatte mit Greifern einer Transportvorrichtung zu erfassen, anzuheben, zu bewegen und wieder abzusetzen.

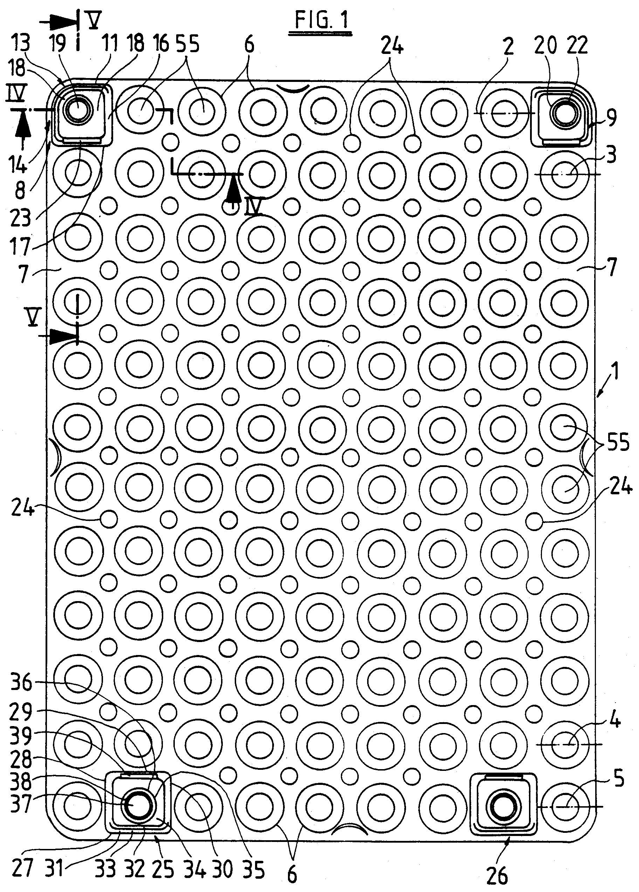

Die Erfindung wird nachfolgend anhand eines in der Zeichnung dargestellten Ausführungsbeispieles des näheren erläutert. Es zeigt
- Fig. 1: eine Ansicht auf die Kulturplatte von oben,
- Fig. 2: eine Ansicht auf die Kulturplatte von unten,

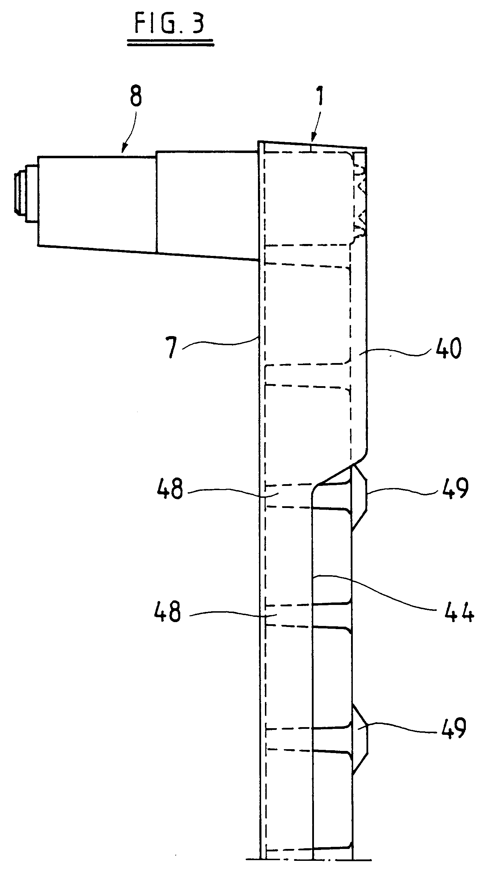

- Fig. 3: eine Seitenansicht auf Figur 1,
- Fig. 4: einen Schnitt längs der Linie IV-IV der Figur 1 durch zwei ohne gegenseitigen Abstand aufeinander gestapelte Kulturplatten und
- Fig. 5: einen Schnitt längs der Linie V-V durch Figur 1 durch zwei mit gegenseitigem Abstand aufeinander gestapelte Kulturplatten.

Die in der Zeichnung dargestellte Kulturplatte 1 dient zum Züchten von Jungpflanzen. Sie ist als Rechteck ausgebildet und hat zwölf parallel zueinander angeordnete Reihen 2,3,4,5 mit jeweils neun Töpfen 6, die an der Deckplatte 7 der Kulturplatte 1 angeformt und gegenüber dieser nach unten ausgeformt sind.

In der ersten Reihe 2 sind anstelle der beiden äußersten Töpfe zwei Stützen 8,9 vorgesehen, die an ihrem unteren Ende 10 offen und hohl ausgebildet sind. Die Stütze 8 ist in Höhe der Deckplatte 7 an der Kulturplatte 1 befestigt und nach oben unter Bildung einer unteren Stufe 11 und einer oberen Stufe 12 konisch ausgebildet. Zwischen der unteren Stufe 11 und der oberen Stufe 12 ist an den beiden von der Kulturplatte 1 aus nach außen gerichteten Wänden 13,14 der Stütze 8 ein Absatz 15 vorgesehen. Die beiden zur Kulturplatte 1 hin gewendeten Wände 16,17 sind eben.

Am oberen Ende 18 der Stütze 8 ist ein Zentrierungsansatz 19 vorgesehen, der aus einem zylindrischen unteren Zentrierungsteil 20 und einem zylindrischen oberen Zentrierungsteil 21 besteht, zwischen denen ein Absatz 22 vorgesehen ist. Die an der Wand 16 angrenzende Wand 17 der Stütze 8 hat eine Öffnung 23.

Die in der ersten Reihe 2 der Stütze 8 gegenüberliegend angeordnete Stütze 9 ist entsprechend der Stütze 8 ausgebildet. Zwischen den beiden Stützen 8 und 9 der ersten Reihe 2 sind sieben Töpfe 6 vorgesehen. Die übrigen Reihen mit Ausnahme der letzten Reihe 5 enthalten neun Töpfe 6. In der Deckplatte 7 sind zwischen den Töpfen 6 Öffnungen 24 vorgesehen.

In der letzten Reihe 5 sind jeweils zwischen einem äußeren und fünf inneren Töpfen Stützen 25,26 vorgesehen. Die Stütze 25 hat eine Außenwand 27 und drei Innenwände 28,29,30 und ist in Höhe der Deckplatte 7 der Kulturplatte 1 an dieser befestigt. Die äußere Wand 27 hat einen unteren Bereich 31 und einen oberen Bereich 32, zwischen denen eine Stufe 33 vorgesehen ist. Am oberen Ende 34 der Stütze 25 ist ein Zentrierungsansatz 35 vorgesehen der aus einem unteren zylindrischen Teil 36 und einem oberen zylindrischen Teil 37 besteht, zwischen denen ein Absatz 38 vorgesehen ist.

Die nach innen orientierten Wände 28,29,30 sind eben ausgebildet. In der Wand 29 ist eine Öffnung 39 vorgesehen. Die in der untersten Reihe 5 gegenüberliegende Stütze 26 ist entsprechend der vorstehend beschriebenen Stütze 25 ausgebildet.

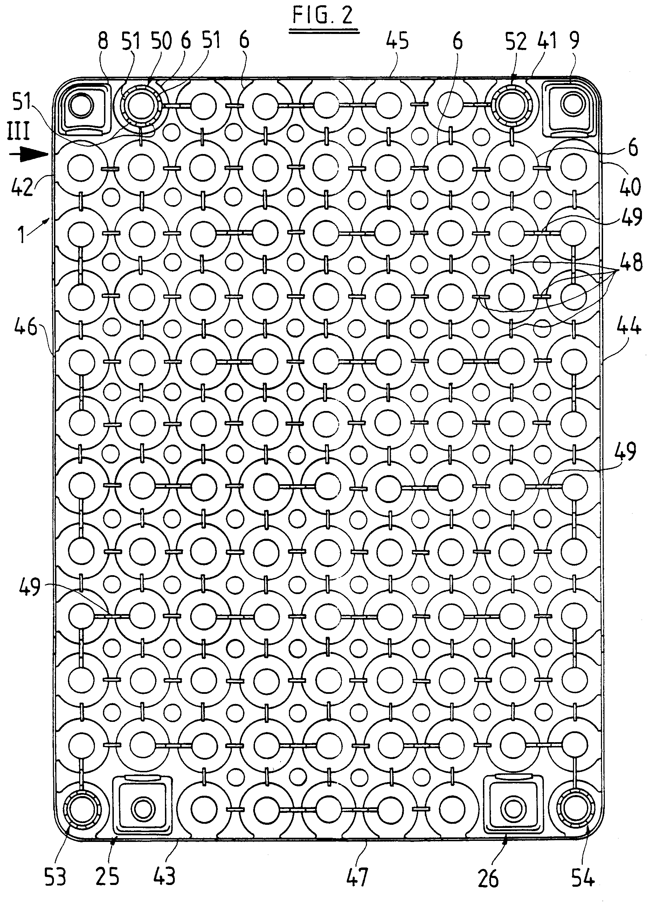

Wie insbesondere in Figur 2 dargestellt ist, hat die Kulturplatte einen umlaufenden Rand 40,41,42,43, in dem Ausnehmungen 44,45,46,47 vorgesehen sind. Jeder Topf 6 ist mit den Nachbartöpfen über Stabilisierungsstege 48 verbunden. Eine Anzahl von Stabilisierungsstegen 48 ist in einem bestimmten Muster über die Unterseite der Kulturplatte 1 verteilt mit nach unten gerichteten Verlängerungen 49 versehen, mit denen die Kulturplatte 1 auf dem Untergrund fest und stabil aufsteht.

Der der Stütze 8 benachbarte Topf hat an seinem Boden einen zylindrischen Stützring 50, der auf seinem Umfang verteilt mehrere Durchlässe 51 zum Ablauf von überschüssigem Wasser aufweist.

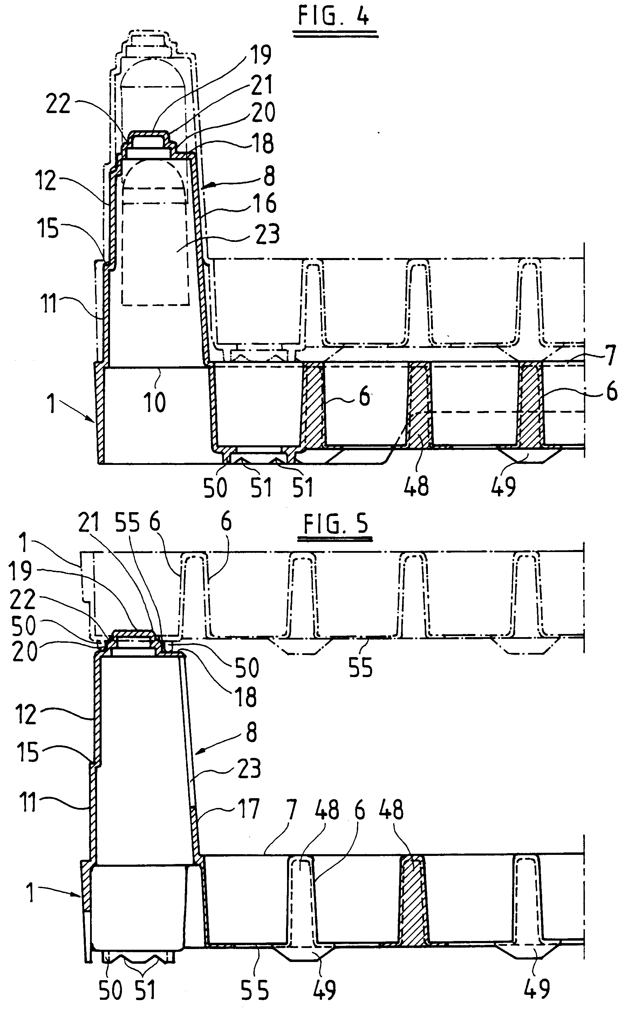

In Figur 4 ist der Zustand dargestellt, in dem zwei Kulturplatten ohne Abstand zueinander gestapelt sind. Dabei ist die obere Kulturplatte so auf die untere aufgesetzt, daß die Stützen 8,9,25,26 die entsprechenden Stützen der unteren Kulturplatte übergreifen. Dabei liegt die obere Kulturplatte dicht auf der unteren Kulturplatte auf, so daß ein derart angeordneter Stapel einer Mehrzahl von Kulturplatten in der Höhe einen minimalen Raum einnimmt und über hohe Stabilität verfügt, so daß ein Umkippen eines auch sehr hoch gestapelten Stapels nicht zu befürchten ist.

In Figur 5 ist die obere Kulturplatte gegenüber der unteren Kulturplatte um 180° gewendet, so daß die obere Kulturplatte mit den Stützringen 50,52,53,54 auf den Stützen 8,9,25,26 der unteren Kulturplatte aufstehen, so daß die beiden Kulturplatten einen vertikalen Abstand der doppelten Höhe einer Kulturplatte haben. Auch in diesem gestapelten Zustand mehrere Kulturplatten ist der Stapel der Kulturplatten fest und stabil, so daß ein Umkippen auch eines sehr hoch gestapelten Stapels nicht zu befürchten ist.

Die Öffnungen 23,39 in den Stützen 8,9,25,26 sind für Greifer einer in der Zeichnung nicht dargestellten Vorrichtung vorgesehen mit der die Kulturplatten angehoben, bewegt und wieder abgesetzt werden. Auch die in dem Rand 40,41,42,43 der Kulturplatte 1 vorgesehenen Ausnehmungen 44,45,46,47 sind vorgesehen, damit die Kulturplatte von den Greifern dieser Vorrichtung erfaßt werden können, mit der die Kulturplatte angehoben, bewegt und wieder abgesetzt wird.

In dem in Figur 5 dargestellten Stapel mehrerer Kulturplatten mit Abstand übereinander steht die obere Kulturplatte mit dem Stützring 50 auf dem Boden 18 der Stütze 8 und ist durch den unteren Bereich 20 des Zentrierungsansatzes 19 zentriert. Außerdem greift der obere Teil 21 des Zentrierungsansatzes 19 durch die untere Öffnung 55 des Topfes 6. Hierdurch ist eine sichere Auflage und Zentrierung der oberen Kulturplatte auf der unteren Kulturplatte gewährleistet.

Zur Bepflanzung der Kulturplatte werden die Töpfe 6 zunächst mit einem Preßballen Blumenerde gefüllt. Anschließend werden Stecklinge in die Preßballen eingepflanzt. Danach werden die Kulturplatten in einem Gewächshaus je nach Pflanzenart etwa drei Wochen kultiviert, d.h. bewurzelt. Nach beendetem Kultivieren werden die Kulturplatten aus dem Gewächshaus entnommen und wie in Figur 5 dargestellt gestapelt sowie in diesem Zustand zum Versand gebracht.

## Patentansprüche

1. Kulturplatte zum Züchten von Jungpflanzen mit in parallel zueinander angeordneten Reihen an der Deckplatte der Kulturplatte angeformten und gegenüber der Deckplatte nach unten orientierten Töpfen mit Löchern am Boden der Töpfe und mit einem von der Deckplatte nach unten gerichteten umlaufenden Rand, **dadurch gekennzeichnet**, daß in der ersten Reihe (2) anstelle der beiden äußersten Töpfe zwei Stützen (8,9) sowie in der letzten Reihe (5) anstelle der beiden zweitäußersten Töpfe zwei Stützen (25,26) vorgesehen sind, die hohl und unten offen sowie nach oben orientiert sind, daß in der ersten Reihe (2) die zwei zweitäußersten Töpfe am Boden je einen Stützring (50) sowie in der letzten Reihe die zwei äußersten Töpfe am Boden je einen Stützring (50) aufweisen und daß am oberen Ende (18) der Stützen (8,9,25,26) je ein Zentrierungsansatz (19) vorgesehen ist.

2. Kulturplatte nach Anspruch 1, dadurch gekennzeichnet, daß die Stützen (8,9,25,26) in ihren zur Kulturplatte (1) hinweisenden Wänden (16,17,29) je eine Öffnung (23,39) aufweisen.

3. Kulturplatte nach Anspruch 1 oder 2, dadurch gekennzeichnet, daß die Stützringe (50) am Boden der zwei äußersten und der zwei zweitäußersten Töpfe seitliche Ausnehmungen (51) aufweisen.

4. Kulturplatte nach einem der vorhergehenden Ansprüche, dadurch gekennzeichnet, daß die Töpfe (6) unterhalb der Deckplatte (7) mit Stabilisierungsstegen (48) verbunden sind.

5. Kulturplatte nach einem der vorhergehenden Ansprüche, dadurch gekennzeichnet, daß ein Teil der Stabilisierungsstege (48) in einem bestimmten Muster jeweils um einen gleichen Betrag nach unten verlängert sind.

6. Kulturplatte nach einem der vorhergehenden Ansprüche, dadurch gekennzeichnet, daß an den vier Seiten der Kulturplatte (1) der umlaufende Rand (40,41,42,43) je eine untere Aussparung (44,45,46,47) aufweist.

## Claims

1. A cultivating tray for growing plantlets, having pots which are moulded on the cover tray of the cultivating tray, in rows arranged parallel to one another, and which are downwardly oriented in opposition to the cover tray and have holes in their bases, and having a peripheral edge which is directed downwards from the cover plate, characterized in that in the first row (2), instead of the two outermost pots, two supports (8, 9) are provided, and in the last row (5), instead of the two next to outermost pots, two supports (25, 26) are provided which are hollow and are downwardly open and upwardly oriented, in that in the first row (2) the two next to outermost pots each have at the base a supporting ring (50), and in the last row the two outermost pots each have at the base a supporting ring (50), and in that a respective centring piece (19) is provided at the upper end (18) of the supports (8, 9, 25, 26).

2. A cultivating tray according to Claim 1, characterized in that the supports (8, 9, 25, 26) have in their walls (16, 17, 29) facing the cultivating tray (1) in each case an opening (23, 29).

3. A cultivating tray according to Claim 1 or 2, characterized in that the supporting rings (50) at the base of the two outermost and the two next to outermost pots have lateral cutouts (51).

4. A cultivating tray according to one of the preceding claims, characterized in that the pots (6) are connected to stabilizing webs (48) below the cover tray (7).

5. A cultivating tray according to one of the preceding claims, characterized in that some of the stabilizing webs (48) are prolonged downwards in a particular pattern, in each case by the same amount.

6. A cultivating tray according to one of the preceding claims, characterized in that the peripheral edge (40, 41, 42, 43) has on the four sides of the cultivating tray (1) a respective lower cutout (44, 45, 46, 47).

## Revendications

1. Plateau de culture pour cultiver des jeunes plants comprenant des rangées parallèles de pots formés dans la plaque supérieure du plateau de culture et orientés vers le bas, avec des trous dans les fonds des pots et comportant un bord périphérique dirigé vers le bas depuis la plaque supérieure, caractérisé en ce que, dans la première rangée (2), à la place des deux pots les plus à l'extérieur, il est prévu deux montants (8, 9) et, de même, dans la dernière rangée (5), à la place des deux pots les plus à l'extérieur, il est prévu deux montants (25, 26), qui sont creux, ouverts en bas et sont orientés vers le haut, que dans la première rangée (2), les deux pots avant-derniers vers l'extérieur, présentent chacun au niveau du fond, une couronne d'appui (50) et de même, dans la dernière rangée, les deux pots avant-derniers vers l'extérieur, présentent chacun, au niveau du fond, une couronne d'appui (50), et que à l'extrémité supérieure (18) de chaque montant (8, 9, 25, 26) il est prévu une saillie de centrage (19).

2. Plateau de culture selon la revendication 1, caractérisé en ce que les montants (8, 9, 25, 26) présentent chacun, dans leurs parois (16, 17, 29) tournées vers le plateau de culture (1), une ouverture (23, 39)

3. Plateau de culture selon la revendication 1 ou 2, caractérisé en ce que les couronnes d'appui (50) au niveau des fonds des deux pots les plus à l'extérieur et des deux pots avant-derniers vers l'extérieur présentent des évidements latéraux (51).

4. Plateau de culture selon l'une des revendications précédentes, caractérisé en ce que les pots (6) sont liés, sous la plaque supérieure (7), avec des barrettes de stabilisation (48).

5. Plateau de culture selon l'une des revendications précédentes, caractérisé en ce qu'une partie des barrettes de stabilisation (48), selon une configuration déterminée, sont prolongées vers le bas d'une même longueur.

6. Plateau de culture selon l'une des revendications précédentes, caractérisé en ce que, sur les quatre côtés du plateau de culture (1), le bord périphérique (40, 41, 42, 43) présente une découpe inférieure (44, 45, 46, 47).
